# EUROPÄISCHE PATENTANMELDUNG

(11) **EP 1 498 170 A1**
(43) Veröffentlichungstag der Anmeldung: **19.01.2005**
(21) Anmeldenummer: 04011725.1
(22) Anmeldetag: 18.05.2004
(51) Int. Cl.: B01D 39/16

(54) **Zwei-Lagen Synthetik-Filterelement**

(30) Priorität: 16.07.2003 DE 10332439
(71) Anmelder: Sandler AG, 95126 Schwarzenbach/Saale (DE)
(72) Erfinder:

(57) **Zusammenfassung**

Die vorliegende Erfindung betrifft ein mehrschichtiges, plissierfähiges Filtermaterial zur Filtration von Feststoff-Partikeln aus Fluiden, insbesondere aus Gasen, welches aus mindestens einer schmelzgeblasenen Vliesstoff-Lage und aus mindestens einer kardierten Vliesstoff-Lage besteht, die klebstofffrei miteinander verbunden sind, wobei das kardierte Vlies verdichtete und unverdichtete Bereiche aufweist, und, wobei das schmelzgeblasene Vlies mit dem kardierten Vlies vornehmlich in dessen unverdichteten Bereichen mittels Multi-Mikrofilamentsträngen verbunden ist, und, wobei das Filtermaterial Mikrotaschen zur Staubspeicherung beinhaltet.

## Beschreibung

Die vorliegende Erfindung betrifft ein mehrschichtiges, plissierfähiges Filtermaterial zur Filtration von Feststoff-Partikeln aus Fluiden, insbesondere aus Gasen, welches aus mindestens einer schmelzgeblasenen Vliesstoff-Lage und aus mindestens einer kardierten Vliesstoff-Lage besteht, die klebstofffrei miteinander verbunden sind.

An moderne Filtermaterialien der gattungsgemäßen Art stellt man Anforderungen wie Sortenreinheit der Produkte, wirtschaftliche Fertigung, problemlose Verarbeitbarkeit auch beim Faltvorgang, ausreichend mechanische Stabilität beim Gebrauch, eine dem Einsatzzweck adäquate Luftdurchlässigkeit bei effektiver Abscheideleistung und eine hohe Staubspeicherkapazität, d. h. eine lange Lebensdauer.

Das EP 0910454 B1 beschreibt einen Partikelfilter in Form eines plissierten schichtförmigen Vliesmaterials, der als Raumfilter oder als Filter für den Kraftfahrzeuginnenraum verwendet wird.
Als Filtermedium wird ein einlagiges, trägerloses Mikro-Spunbondvlies vorgeschlagen, das abströmseitig eine höhere Faserdichte aufweist als anströmseitig. Allerdings bietet ein solches einlagiges Material nur eine geringe Staubspeicherkapazität, d. h. mit einlagigen Medien kann ein Standzeitgewinn nur auf Kosten des Abscheidegrades erreicht werden.

In der Patentschrift DE 19920983 C2 werden zwei- oder mehrlagige Filtermedien für die Luftfiltration dargestellt, die als Filterelemente - zum Beispiel sterngefaltete Patronen, plissierte Panelfilter, Mini-Pleat-Cassetten, Flachfilter - zur Filtration von Feststoffen aus Gasen Verwendung finden.

Eine grobe, offene Meltblownschicht, deren Poren größer als die der nachfolgenden Schicht sind, befindet sich auf der Anströmseite des zwei- oder mehrlagigen Filtermediums.
Ein zusätzlicher Prozess zur Verbindung der Einzellagen, z. B. mittels Ultraschallschweißung, thermischer Schweißung oder Kleberauftrag ist erforderlich, damit sich beim Plissieren die Lagen nicht verschieben.
Aufgrund der aufwendigen Herstellung sind solche Produkte entsprechend kostspielig und haben sich deshalb im Markt nicht durchgesetzt.

Die Patentschrift WO 98/52672 A1 beschreibt einen plissierbaren, laminierten Verbundvliesstoff als Filtermedium für Luftfilter im Automobilbereich.
Dieses Filtermedium setzt sich zusammen aus einer voluminösen Vliesfasermatte aus Stapelfasern, die im Querschnitt einen Faser-Dichte-Gradienten aufweist, einer damit laminierten Spinnvlieslage und einer versteifenden Deckschicht.
Die Laminierung bedingt einen zusätzlichen Arbeitsgang und durch den Einsatz von Klebstoffen kann es zum Staubblocking im Übergangsbereich der Vlieslagen kommen.

DE 20207663 U1 zeigt einen mehrlagigen Filteraufbau zur Entstaubung von Fluiden, der eine Grobstaub-, eine Feinstaub- und eine Stützlage umfasst, und einen Gradienten aufweist, d. h., die Faserdurchmesser nehmen von der Grobstaub- zur Feinfilterlage kontinuierlich ab.
Verwendung finden solche mehrlagigen Filteraufbauten als Taschenfilterbeutel, als plissierter Filter in einer Filterkassette für die Industrieentstaubung, als Luftfilter für Kraftfahrzeuge oder als flächiger Abluftfilter in einer Staubreinigungseinrichtung im Haushaltsbereich.
Dieser Filter ist wenigstens dreilagig gehalten und von daher kostenintensiver.

Aus EP 0904819 A1 ist ein plissierter Filter bekannt, der aus einem Vliesstoff mit einer Mischung aus thermoplastischen Fasern unterschiedlicher Feinheit besteht, welcher entweder mit einer mikroporösen Membran oder mit einem porösen Glasfasermaterial oder mit einem langfaserigen Vlies laminiert ist.

Nachteilig wirkt sich hierbei allerdings aus, dass der Materialaufbau des Filters nicht einheitlich gehalten ist, was sich bei der Entsorgung der gebrauchten Produkte problematisch gestaltet.

In DE 19953717 C2 wird eine für Fluide durchlässige, aus mindestens einer Lage aufgebaute Fasermatte aus Mikrofasern offenbart, welche im Partikelfiltrationsbereich als Filtermedium zur Herstellung von Filtertaschen, planen Filtereinsätzen oder gefalteten Filtereinsätzen in Filterpatronen oder Kassetten dient. Sind hohe Abscheideleistungen bei gleichzeitig hoher Staubspeicherung gefordert, kann dies nur durch Aufeinanderschichtung mehrerer Lagen dieser Fasermatte erzielt werden. Das Herstellungsverfahren ist dann wiederum äußerst aufwendig.

Der Erfindung liegt die Aufgabe zugrunde, unter Vermeidung der Nachteile des Standes der Technik ein mehrschichtiges Filtermaterial bereitzustellen, welches einerseits verschiebegesicherte Einzel-Lagen ohne den Einsatz von Klebstoffen aufweist, und andererseits eine wesentliche Verbesserung der Staubspeicherfähigkeit bei weitgehend konstanter Luftdurchlässigkeit ermöglicht.

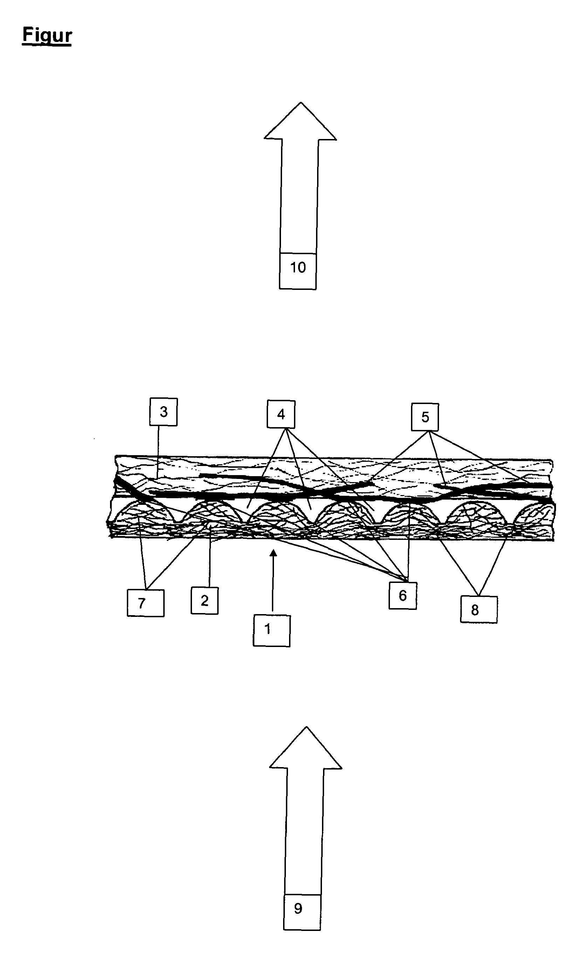

Die Figur zeigt das erfindungsgemässe mehrschichtige Filtermaterial (1) in einer Querschnitts-Ansicht, bestehend aus einem in Anströmrichtung (9) angeordneten kardierten Vlies (2) und einem in Abströmrichtung (10) damit klebstofffrei verbundenen schmelzgeblasenen Vlies (3).

Das kardierte Vlies (2) besitzt unverdichtete Bereiche (7) und verdichtete Bereiche (8). Die unverdichteten Bereiche (7) mit einer relativ offenen Faserisotropie bilden kissenartige Oberflächenstrukturen aus, die von den verdichteten Bereichen (8) begrenzt werden.

Unverdichtete Bereiche (7) und verdichtete Bereiche (8) erhält man hierbei durch den Einsatz einer mit entsprechendem Muster gravierten Kalanderwalze, welche unter definiertem Druck und definierter Temperatur gegen eine glatte Kalanderwalze läuft.

Abgesehen von thermisch kalanderverfestigten Vliesstoffen können alternativ auch hydrodynamisch verfestigte Stapelfaservliesstoffe oder thermisch heißluftverfestigte Stapelfaservliesstoffe verwendet werden.

Das so verfestigte kardierte Vlies (2) wird als Trägermaterial für den Meltblown-Prozess vorgelegt.
Der eigentliche Verbund der Schichten geschieht nach der Lehre aus DE 20118532 U1.

Dabei erfolgt die Bildung des schmelzgeblasenen Vlieses (3) nach der in DE 19953717 A1 beschriebenen Methode.
Die Maschineneinstellung an der Schmelzblaseinheit wird dabei so gewählt, dass sich neben den einzelnen Mikrofasern auch Zusammenballungen von Mikrofasern ergeben, sogenannte Multi-Mikrofilamentstränge (5).
Diese Multi-Mikrofilamentstränge (5) sind aufgrund ihrer hohen Temperatur beim Auftreffen auf das kardierte Vlies (2) noch weitgehend schmelzflüssig, wenn sie aus dem kardierten Vlies (2) herausstehende Stapelfasern umfliessen.
Die abstehenden Fasern an den erhabenen Stellen der kissenartigen Oberflächenstrukturen der unverdichteten Bereiche (7) innerhalb des kardierten Vlieses (2) werden beim Meltblown-Prozess von schmelzflüssigen Multi-Mikrofilamentsträngen (5) umschlossen und mechanisch verschweißt, so dass punktuelle Verbundstellen (6) zwischen dem kardierten Vlies (2) und dem schmelzgeblasenen Vlies (3) zustande kommen.
Damit ist eine grenzschichtenfreie Verbindung ohne den Einsatz von Klebstoffen möglich, d. h. die Luftdurchlässigkeit des mehrschichtigen Filtermaterials (1) bleibt nahezu unvermindert und das Staubblocking zwischen den Schichten, das zum verfrühten Zusetzen des Filters führt, wird vermieden.

Aufgrund der speziellen Charakteristik dieser über die Fläche gleichmäßig verteilten punktuellen Verbundstellen (6) bleibt ein ausreichender Bewegungsspielraum der einzelnen Schichten, die wegen ihren unterschiedlichen physikalisch-mechanischen Materialeigenschaften wie Zugfestigkeit und Dehnung unterschiedlich stark geknickt werden, während der Verformung beim Faltprozess, erhalten.

Eine unkontrollierte Verschiebung zwischen den Schichten bzw. die Gefahr des Delaminierens während des Plissiervorgangs wird somit verhindert.

Zwischen dem schmelzgeblasenen Vlies (3) und dem oberflächenstrukturiertem, kardierten Vlies (2) bildet sich eine Vielzahl von Mikrotaschen (4) aus, die in der Lage sind, Staubpartikel aufzunehmen, wodurch sich die Staubspeicherfähigkeit des mehrlagigen Filtermaterials (1) bei nahezu unverminderter Druckdifferenz erheblich erhöht.

Zudem wurde überraschend gefunden, dass sich die aus dem kardierten Vlies (2) bestehende Vorfilter-Schicht bei Durchströmung von Luft infolge von zwischen Vorfilter- und Feinfilter-Schicht auftretenden Turbulenzen durch die sich daraus ergebende Vibration der Filter-Schichten selbst vom Staub befreien kann bzw. den transportierten Staub entsprechend gut in die Mikrotaschen (4) einlagern kann.

Das erfindungsgemässe Filtermaterial (1) zeichnet sich aus durch eine hervorragende Verarbeitbarkeit beim Faltprozess bei gleichzeitig optimierten lufttechnischen Daten sowie einer wesentlichen Erhöhung der Staubspeicherfähigkeit im Vergleich zu den aus dem Stand der Technik bekannten Filtermaterialien.

Anhand des nachstehenden Ausführungsbeispiels wird die Erfindung im Detail beschrieben.

Materialaufbau des erfindungsgemässen mehrschichtigen Filtermaterials (1):
- Kardiertes Vlies (2):: Kardiertes, thermisch verfestigtes Stapelfaservlies, Flächengewicht: 39,1 g/m²
- Schmelzgeblasenes Vlies (3):: Mikrofaser-Vliesstoff, hergestellt nach dem Meltblown-Verfahren, Flächengewicht: 120 g/m²

Die Tabelle 1 zeigt die wesentlichen Materialeigenschaften des kardierten Vlieses (2), des schmelzgeblasenen Vlieses (3) und des erfindungsgemässen mehrschichtigen Filtermaterials (1).

**Tabelle 1**

| | Kardiertes Vlies (2) aus 100 % PP-Fasern 2,2 dtex, 40 mm Stapellänge | Schmelzgeblasenes Vlies (3) aus 100 % PP-Granulat, Borflow HL508FB | Mehrschichtiges Filtermaterial (1) |
|---|---|---|---|
| Flächengewicht nach EN 29073-1 | 39,1 g/m² | 120,0 g/m² | 159,1 g/m² |
| Reißkraft längs nach EN 29073-3 | 21,69 N | 19,43 N | - |
| Reißkraft quer nach EN 29073-3 | 3,84 N | 18,82 N | - |
| Dehnung längs nach EN 29073-3 | 64,80 % | 5,50 % | - |
| Dehnung quer nach EN 29073-3 | 123,80 % | 11,10 % | - |
| Dicke mit 0,05 N/cm² nach EN ISO 9073-2 | 0,48 mm | 0,89 mm | 1,27 mm |
| Luftdurchlässigkeit mit 200 Pa nach EN-ISO 9237 | > 3000 l/m²/s | 1060 l/m²/s | 600 l/m²/s |
| Lagenhaftung längs nach DIN 53539 | - | - | 0,38 N |
| Lagenhaftung quer nach DIN 53539 | - | - | 0,21 N |

Tabelle 2 zeigt den Unterschied der Staubaufnahme zwischen dem einlagigen Meltblown und dem erfindungsgemässen Filtermaterial (1).

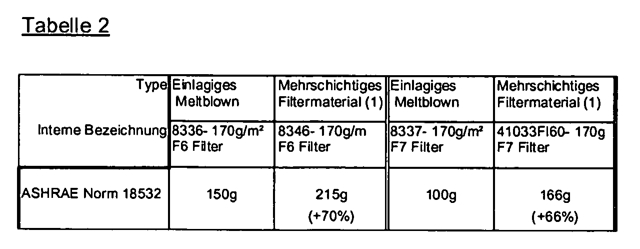

Die Herstellung des aus den Einzel-Lagen (2) und (3) bestehenden Filtermaterials (1) geschieht dabei wie folgt.

Das kardierte Vlies (2) wird nach bekannten Krempelverfahren aus 100 % Polypropylen-Stapelfasern mit einer Feinheit von 2,2 dtex und 40 mm Stapellänge hergestellt und anschließend einer Kalanderpassage unterzogen.
Durch den Einsatz einer mit entsprechendem Muster gravierten Kalanderwalze, welche unter definiertem Druck und definierter Temperatur gegen eine glatte Kalanderwalze läuft, ergeben sich unverdichtete Bereiche (7) und verdichtete Bereiche (8) innerhalb des kardierten Vlieses (2).
In den unverdichteten Bereichen (7) des kardierten Vlieses liegen aufgrund der in diesen Bereichen offenen Vliesstruktur abstehende Stapelfasern vor, die prädestiniert sind, insbesondere an den erhabenen Flächen der unverdichteten Bereiche (7) mit den Multi-Mikrofilamentsträngen (5) des schmelzgeblasenen Vlieses (3) die gewünschten Verbundstellen (6) auszubilden.
Das kardierte Vlies (2) fungiert beim Schmelzblas-Verfahren als Trägermaterial.
Die Bildung des mehrschichtigen Filtermaterials (1) erfolgt nach dem Schmelzblas-Verfahren.
Das Trägermaterial wird dabei über eine Kollektortrommel geführt, sodass sich die schmelzgeblasenen Fasern auf der strukturierten Oberfläche des kardierten Vlieses (2) sammeln.

Die Maschineneinstellung an der Schmelzblaseinheit wird dabei so gewählt, dass sich - abgesehen von den einzelnen Mikrofasern - auch Zusammenballungen von Mikrofasern ausbilden - sogenannte Multi-Mikrofilamentstränge (5).
Diese Multi-Mikrofilamentstränge (5) besitzen eine derart hohe Temperatur, dass sie im Moment des Auftreffens auf das kardierte Vlies (2) noch weitgehend schmelzflüssig sind und die aus den unverdichteten Bereichen (7) abstehenden Stapelfasern umfliessen und nach dem Erkalten punktuelle Verbundstellen (6) zwischen dem kardierten Vlies (2) und dem schmelzgeblasenen Vlies (3) entstehen. Durch diese besondere Ausgestaltung der Verbindungsstellen ist es möglich, auf den Einsatz eines Klebers zu verzichten, der eine unerwünschte Trennschicht mit sich bringen würde.

Das erfindungsgemässe mehrschichtige Filtermaterial ist besonders gut geeignet für industrielle raumlufttechnische Anlagen, für plissierte Filter sowie für Kassetten-Filter, und für Luftfilter in Kraftfahrzeugen.

### Bezugszeichen-Liste

- 1 =: mehrschichtiges Filtermaterial
- 2 =: kardiertes Vlies
- 3 =: schmelzgeblasenes Vlies
- 4 =: Mikrotaschen
- 5 =: Multi-Mikrofilamentstränge
- 6 =: Verbundstellen
- 7 =: unverdichtete Bereiche
- 8 =: verdichtete Bereiche
- 9 =: Anströmrichtung
- 10 =: Abströmrichtung

## Patentansprüche

1. Mehrschichtiges Filtermaterial (1), bestehend aus mindestens einem schmelzgeblasenen Vlies (3) und mindestens einem damit klebstofffrei verbundenen kardiertem Vlies (2)
**dadurch gekennzeichnet,**
**dass** das kardierte Vlies (2) verdichtete Bereiche (8) und unverdichtete Bereiche (7) aufweist,
**dass** das schmelzgeblasene Vlies (3) mit dem kardierten Vlies (2) vornehmlich in dessen unverdichteten Bereichen (7) mittels Multi-Mikrofilamentsträngen (5) verbunden ist, und,
**dass** das Filtermaterial Mikrotaschen (4) beinhaltet.

2. Mehrschichtiges Filtermaterial (1) nach Anspruch 1,
**dadurch gekennzeichnet,**
**dass** das kardierte Vlies (2) aus Stapelfasern aus thermoplastischen Polymeren besteht.

3. Mehrschichtiges Filtermaterial (1) nach Anspruch 1 oder 2,
**dadurch gekennzeichnet,**
**dass** das kardierte Vlies (2) aus Stapelfasern besteht, welche aus Polymeren, ausgewählt aus der Gruppe der Polyolefine bestehen.

4. Mehrschichtiges Filtermaterial (1) nach einem der Ansprüche 1 bis 3,
**dadurch gekennzeichnet,**
**dass** das kardierte Vlies (2) aus Stapelfasern besteht, welche aus Polymeren, ausgewählt aus der Gruppe der Polyester bestehen.

5. Mehrschichtiges Filtermaterial (1) nach einem der Ansprüche 1 bis 4,
**dadurch gekennzeichnet,**
**dass** das kardierte Vlies (2) aus Stapelfasern besteht, welche aus Polymeren, ausgewählt aus der Gruppe der Polyamide bestehen.

6. Mehrschichtiges Filtermaterial (1) nach einem der Ansprüche 1 bis 5,
**dadurch gekennzeichnet,**
**dass** das kardierte Vlies (2) aus Stapelfasern besteht, welche eine Feinheit von mindestens 0,9 dtex und höchstens 12,0 dtex aufweisen.

7. Mehrschichtiges Filtermaterial (1) nach einem der Ansprüche 1 bis 6,
**dadurch gekennzeichnet,**
**dass** das kardierte Vlies (2) ein Flächengewicht von mindestens 20 g/m² und von höchstens 100 g/m² aufweist.

8. Mehrschichtiges Filtermaterial (1) nach einem der Ansprüche 1 bis 7,
**dadurch gekennzeichnet,**
**dass** das kardierte Vlies (2) eine Dicke von mindestens 0,2 mm und von höchstens 1,5 mm aufweist.

9. Mehrschichtiges Filtermaterial (1) nach einem der Ansprüche 1 bis 8,
**dadurch gekennzeichnet,**
**dass** die verdichteten Bereiche (8) und die unverdichteten Bereiche (7) mit Hilfe einer Prägewalze unter Einwirkung von Druck und Hitze in das kardierte Vlies (2) eingebracht sind.

10. Mehrschichtiges Filtermaterial (1) nach einem der Ansprüche 1 bis 9,
**dadurch gekennzeichnet,**
**dass** die verdichteten Bereiche (8) und die unverdichteten Bereiche (7) mit Hilfe einer strukturierten Trommel mittels Thermofusion in das kardierte Vlies (2) eingebracht sind.

11. Mehrschichtiges Filtermaterial (1) nach einem der Ansprüche 1 bis 10,
**dadurch gekennzeichnet,**
**dass** die verdichteten Bereiche (8) und die unverdichteten Bereiche (7) mit Hilfe einer strukturierten Trommel hydrodynamisch in das kardierte Vlies (2) eingebracht sind.

12. Mehrschichtiges Filtermaterial (1) nach einem der Ansprüche 1 bis 11,
**dadurch gekennzeichnet,**
**dass** die Luftdurchlässigkeit des kardierten Vlieses (2) zwischen 1500 und 6000 I/m² x sec liegt.

13. Mehrschichtiges Filtermaterial (1) nach einem der Ansprüche 1 bis 12,
**dadurch gekennzeichnet,**
**dass** die Stapelfasern des kardierten Vlieses (2) mit einem antimikrobiell wirksamen Additiv versehen sind.

14. Mehrschichtiges Filtermaterial (1) nach einem der Ansprüche 1 bis 13,
**dadurch gekennzeichnet,**
**dass** die Einzelfilamente und die Multi-Mikrofilamentstränge des schmelzgeblasenen Vlieses (3) aus thermoplastischen Polymeren bestehen.

15. Mehrschichtiges Filtermaterial (1) nach einem der Ansprüche 1 bis 14,
**dadurch gekennzeichnet,**
**dass** der in dem schmelzgeblasenen Vlies (3) enthaltene thermoplastische Kunststoff aus der Gruppe der Polyolefine, der Polyester oder der Polyamide besteht.

16. Mehrschichtiges Filtermaterial (1) nach einem der Ansprüche 1 bis 15,
**dadurch gekennzeichnet,**
**dass** das schmelzgeblasene Vlies (3) eine Dicke von mindestens 0,4 mm und von höchstens 2,5 mm aufweist.

17. Mehrschichtiges Filtermaterial (1) nach einem der Ansprüche 1 bis 16,
**dadurch gekennzeichnet,**
**dass** das schmelzgeblasene Vlies (3) ein Flächengewicht von mindestens 50 g/m² und von höchstens 120 g/m² aufweist.

18. Mehrschichtiges Filtermaterial (1) nach einem der Ansprüche 1 bis 17,
**dadurch gekennzeichnet,**
**dass** die Luftdurchlässigkeit des schmelzgeblasenen Vlieses (3) zwischen 300 und 2000 I/m² x sec liegt.

19. Mehrschichtiges Filtermaterial (1) nach einem der Ansprüche 1 bis 18,
**dadurch gekennzeichnet,**
**dass** die Einzelfilamente und die Multi-Mikrofilamentstränge des schmelzgeblasenen Vlieses (3) mit einem antimikrobiell wirksamen Additiv versehen sind.

20. Mehrschichtiges Filtermaterial (1) nach einem der Ansprüche 1 bis 19,
**dadurch gekennzeichnet,**
**dass** das kardierte Vlies (2) und das schmelzgeblasene Vlies (3) aus polymereinheitlichen Materialien bestehen.

21. Verwendung eines mehrschichtiges Filtermaterials (1) als Luftfilter in einer raumlufttechnischen Anlage
**dadurch gekennzeichnet,**
**dass** das mehrschichtige Filtermaterial (1) aus mindestens einem schmelzgeblasenen Vlies (3) und mindestens einem damit klebstofffrei verbundenen kardiertem Vlies (2) besteht,
**dass** das kardierte Vlies (2) verdichtete Bereiche (8) und unverdichtete Bereiche (7) aufweist,
**dass** das schmelzgeblasene Vlies (3) mit dem kardierten Vlies (2) vornehmlich in dessen unverdichteten Bereichen (7) mittels Multi-Mikrofilamentsträngen (5) verbunden ist, und,
**dass** das Filtermaterial Mikrotaschen (4) beinhaltet.

22. Plissierter Filter, dessen Wandung aus einem mehrschichtigen Filtermaterial (1) besteht,
**dadurch gekennzeichnet,**
**dass** das mehrschichtige Filtermaterial (1) aus mindestens einem schmelzgeblasenen Vlies (3) und mindestens einem damit klebstofffrei verbundenen kardiertem Vlies (2) besteht,
**dass** das kardierte Vlies (2) verdichtete Bereiche (8) und unverdichtete Bereiche (7) aufweist,
**dass** das schmelzgeblasene Vlies (3) mit dem kardierten Vlies (2) vornehmlich in dessen unverdichteten Bereichen (7) mittels Multi-Mikrofilamentsträngen (5) verbunden ist, und,
**dass** das Filtermaterial Mikrotaschen (4) beinhaltet.
